# EUROPÄISCHE PATENTSCHRIFT

(11) **EP 0 847 540 B1**
(45) Veröffentlichungstag und Bekanntmachung des Hinweises auf die Patenterteilung: **01.08.2001**
(21) Anmeldenummer: 96937990.8
(22) Anmeldetag: 30.08.1996
(51) Int. Cl.: G02B 6/38

(54) **STECKVERBINDER FÜR EIN LICHTWELLENLEITERKABEL**
PLUG CONNECTOR FOR A FIBER OPTIC CABLE
CONNECTEUR MULTIPLE POUR CABLE A FIBRES OPTIQUES

(30) Priorität: 01.09.1995 DE 19533498
(43) Veröffentlichungstag der Anmeldung: 17.06.1998
(73) Patentinhaber: Infineon Technologies AG, 81669 München (DE)
(72) Erfinder: WEIGEL, Hans-Dieter, D-10405 Berlin (DE)
(74) Vertreter: Zedlitz, Peter, Dipl.-Inf.
(86) Internationale Anmeldenummer: DE9601658
(87) Internationale Veröffentlichungsnummer: WO9709646

(56) Entgegenhaltungen:
- EP-A- 0 330 399
- US-A- 4 687 288
- US-A- 4 712 860

## Beschreibung

Die Erfindung betrifft einen Steckverbinder für ein Lichtwellenleiterkabel mit einem Steckerstift, der ein Ende eines Lichtwellenleiters umgibt, mit einer zur Steckachse konzentrischen Schraubenfeder, die auf das rückwärtige Ende des Steckerstifts oder eines Steckerstiftlagers aufgeschoben ist, mit einem in Steckrichtung vorderen Gehäuseteil mit einer axialen Durchgangsöffnung , in der der Steckerstift entgegen der Kraft der Schraubenfeder axial verschiebbar ist, und mit einem hinteren Gehäuseteil, das mit dem vorderen Gehäuseteil verbindbar ist.

Ein derartiger bekannter (EP-0 330 399 A1) Steckverbinder bildet ein Kopplungsendstück zum Anschluß eines Lichtwellenleiterkabels, das einen Kabelmantel, Zugentlastungsmittel (z. B. Aramidfasern) und einen von einem schützenden Mantel umgebenen Lichtwellenleiter umfaßt, an beispielsweise ein weiteres Kabel oder an ein optoelektronisches Bauelement. Das abgemantelte koppelseitige Lichtwellenleiterende verläuft in einer zentralen Längsbohrung eines Steckerstiftes. Das in Steckrichtung hintere Ende des Steckerstiftes ist von einem Stiftlager aufgenommen, auf dessen rückwärtige Verlängerung ein Ende einer zur Steckerstiftlängsachse konzentrischen Schraubenfeder aufgeschoben ist und das mit dem Steckerstift in einer zentralen Bohrung eines ersten oder vorderen Gehäuseteils entgegen der Federkraft axial verschiebbar ist. Das andere Ende der Schraubenfeder stützt sich an einem unter Festlegung der Schraubenfeder mit dem vorderen Gehäuseteil verbindbaren hinteren Gehäuseteil mit einer zentralen Bohrung ab, in der der Lichtwellenleiter zum Kabel hin verläuft. Um axiale Zugbelastungen von dem Lichtwellenleiter fernzuhalten, ist das Ende der Zugentlastung zwischen einem rückwärtigen Fortsatz des hinteren Gehäuseteils und einer separaten Hülse durch Crimpen festgelegt.

Bei dem bekannten Steckverbinder muß zunächst der abgemantelte Lichtwellenleiter durch die Durchgangsöffnungen der Gehäuseteile durchgefädelt, in die Längsbohrung des Steckerstiftes eingebracht und in dieser verklebt werden. Dann wird das vordere Gehäuseteil mit dem hinteren Gehäuseteil verbunden; dies erfolgt vorzugsweise unmittelbar nach den vorgenannten Fertigungsschriften, um die empfindliche, zunächst ungeschützt aus dem hinteren Gehäuseteil frontseitig herausragende Steckerstiftanordnung zu schützen. Eine im Hinblick auf Variationen bei der Ausgestaltung des Steckerstiftbereichs wünschenswerte Vorkonfektionierung bei gleichzeitigem Schutz der vorkonfektionierten Steckerstiftanordnung durch ein steckverbindereigenes Bauteil ist bei dem bekannten Steckverbinder nicht möglich.

Der Erfindung liegt daher die Aufgabe zugrunde, einen Steckverbinder mit einer vorkonfektionierbaren, geschützten Steckverbinderanordnung zu schaffen.

Diese Aufgabe wird erfindungsgemäß bei einem Steckverbinder der eingangs genannten Art dadurch gelöst, daß das vordere Gehäuseteil öffnungsinnenseitig angeordnete Haltemittel aufweist, die die Schraubenfeder bei unverbundenem vorderen Gehäuseteil halten und damit diese und den Steckerstift gegen ein rückwärtiges Herausrutschen aus dem vorderen Gehäuseteil sichern. Ein wesentlicher Vorteil der Erfindung besteht darin, daß der Steckerstift und ggf. ein das rückwärtige Ende des Steckerstiftes aufnehmendes Stiftlager und die auf diesen bzw. dieses rückwärtig aufgeschobene Schraubenfeder zusammen mit dem vorderen Gehäuseteil eine während der Fertigung unproblematisch handhabbare vorkonfektionierte Baueinheit bilden. Dadurch können beispielsweise unterschiedliche Steckerstifte mit Schraubenfedern und dem vorderen Gehäuseteil vorkonfektioniert und bei Bedarf in einem abschließenden Fertigungsschritt mit einer ebenfalls vorkonfektionierbaren, das hintere Gehäuseteil und das Lichtwellenleiterkabelende umfassenden Baueinheit verbunden werden. Ein weiterer Vorteil besteht darin, daß - bevor die Gehäuseteile verbunden sind - die rückwärtige Seite des Steckerstiftes bzw. des Stiftlagers für eine Kleberapplikation noch leicht zugänglich ist. Anschließend kann sofort das abgemantelte Lichtwellenleiterende in die Zentralbohrung des Steckerstiftes eingeführt werden.

Nach einer vorteilhaften Ausgestaltung der Erfindung dienen als Haltemittel mindestens zwei sich rückwärtig parallel zur Steckachse erstreckende federnde Rastarme, die mit Rastelementen an der Schraubenfeder angreifen. Die Rastarme können vorzugsweise unmittelbar an das vordere Gehäuseteil angespritzt sein. Durch ihre Federeigenschaften halten die Rastarme die Schraubenfeder in der gewünschten Position und lassen dennoch eine axiale Kompression der Schraubenfeder zu.

Eine hinsichtlich der präzisen Halterung der Schraubenfeder vorteilhafte Ausgestaltung der Erfindung besteht darin, daß die Rastelemente innenseitige, den Windungen der Schraubenfeder zugewandte und auf deren Kontur abgestimmte Profilierungen aufweisen.

Ein Ausführungsbeispiel der Erfindung wird nachfolgend anhand einer Zeichnung näher erläutert; es zeigen:
Figur 1 wesentliche Bestandteile des erfindungsgemäßen Steckverbinders in getrennter Darstellung und
Figur 2 eine Schnittdarstellungen eines Steckverbinders mit Einzelteilen gemäß Figur 1 im zusammengesetzten Zustand.

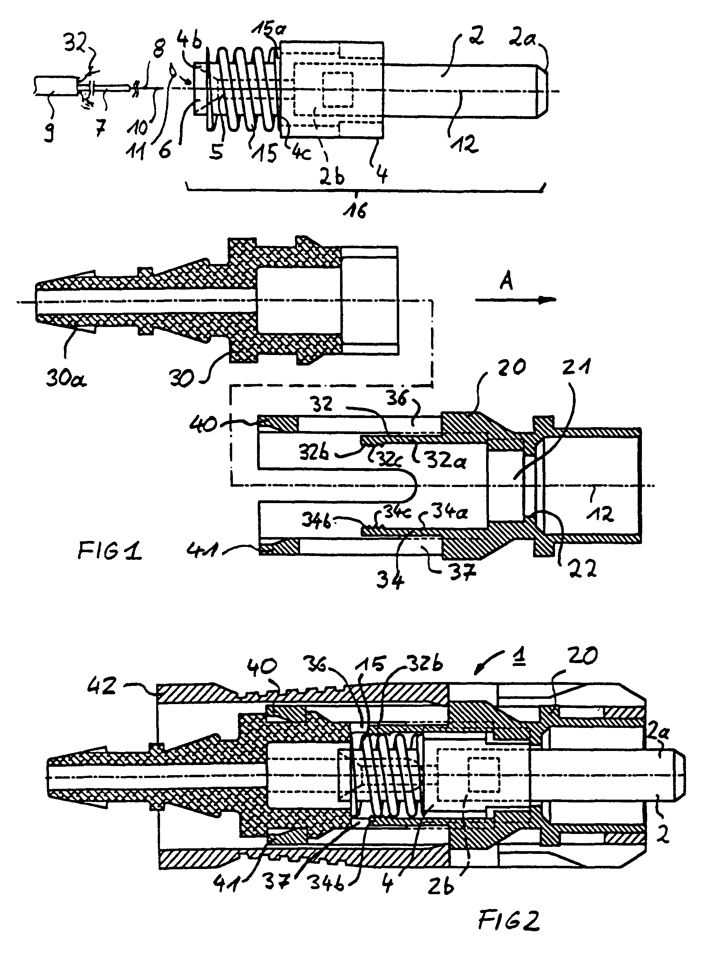

Gemäß den Figuren 1 und 2 umfaßt der Steckverbinder 1 einen Steckerstift 2 mit einem kopplungsseitigen Ende 2a und einem in Steckrichtung A rückwärtigen Ende 2b. Das Ende 2b ist von einem im Spritzguß hergestellten Stiftlager 4 aufgenommen, das eine sich zu dem Ende 2b hin erstreckende Durchgangsbohrung 5 mit einer Einführöffnung 6 zur Aufnahme eines (nur in Figur 1 schematisch angedeuteten) von seinem Schutzmantel 7 endseitig befreiten Lichtwellenleiters 8 eines Kabels 9. Das Ende 10 des Lichtwellenleiters 8 wird in eine nicht näher dargestellte Zentralbohrung des Steckerstifts 2 eingeführt und durch vorherige Applikation eines Klebstoffs 11 in die Einführöffnung 6 fixiert. Auf das rückwärtige Ende 4b des Stiftlagers 4 ist axial eine zur Längsachse (Steckachse) 12 des Steckerstifts 2 konzentrische Schraubenfeder 15 aufgeschoben, die sich mit ihrem einen Ende 15a an einer Schulter 4c abstützt. Die aus dem Steckerstift 2, dem Lager 4 und der Feder 15 gebildete Baugruppe wird nachfolgend auch als Steckeranordnung 16 bezeichnet.

Der Steckverbinder 1 umfaßt weiter ein in Steckrichtung A gesehen vorderes Gehauseteil 20 mit einer axialen Durchgangsöffnung 21 zur Aufnahme des Lichtwellenleiters 8 bzw. der Steckeranordnung 16. Ein in die Durchgangsöffnung 21 ragender Anschlag 22 begrenzt die Bewegungsfreiheit des Stiftlagers 4 bzw. des Steckerstifts 2 in Steckrichtung A. Ein hinteres Gehäuseteil 30 ist in seinem rückwärtigen Bereich 30a konisch und profiliert ausgebildet und dient zur Fixierung von Zugentlastungsmitteln 32, indem diese auf den rückwärtigen Bereich 30a aufgeschoben, bedarfsweise verklebt und von einer nicht gezeigten Knickschutztülle umgeben sind.

Das vordere Gehäuseteil 20 weist innenseitig Haltemittel 32, 34 auf, die als integrale Bestandteile aus dem Material des Gehäuseteils 20 ausgebildet und einstückig geformt sind. Die Haltemittel sichern die Schraubenfeder 15 vor dem Verbinden der Gehäuseteile 20, 30 gegen ein rückwärtiges (entgegen der Steckrichtung A) Herausrutschen aus dem vorderen Gehäuseteil 20. Die Haltemittel sind als sich rückwärtig in die Öffnung 21 parallel zur Steckachse 12 erstreckende federnde Rastarme 32a, 34a ausgebildet und greifen mit Rastelementen 32b, 34b an der Schraubenfeder 15 an (Figur 2). Innenseitig sind die Rastelemente mit Profilierungen 32c, 34c versehen, die den Windungen der Schraubenfeder 15 zugewandt und auf deren Kontur abgestimmt sind. Die Rastarme 32, 34 federn in Längsschlitze 36, 37 innerhalb des Gehäuseteils 20 radial nach außen zurück und weisen dadurch eine besonders günstige Federcharakteristik auf.

Mit der erfindungsgemäßen Ausgestaltung des Steckverbinders können der Steckerstift, das Stiftlager und die Schraubenfeder zusammen mit dem vorderen Gehäuseteil vollkommen unabhängig von den übrigen Komponenten des Steckverbinders vorkonfektioniert werden. Nach dem Aufschieben der Schraubenfeder 15 auf das rückwärtige Ende 4b des Stiftlagers 4 und dem Einbringen dieser Steckeranordnung 16 in das vordere Gehäuseteil 20 greifen die federnden Rastarme 32, 34 mit ihren Profilierungen 32c, 34c an den Schraubenwindungen an und halten damit die Schraubenfeder 15 und die gesamte Steckeranordnung 16 in der für die weitere Montage gewünschten Vorpositionierung. Vollkommen unabhängig von dieser Baugruppe können das rückwärtige Gehäuseteil und ein entsprechend vorkonfektioniertes Lichtwellenleiterkabel vorbereitet und in einem abschließenden Fertigungsgang mit dem vorderen Gehäuseteil verbunden werden. Dabei ist in besonders vorteilhafter Weise der rückwärtige Bereich 4b des Stiftlagers 4 mit der Einführöffnung 6 auch nach der Vorkonfektionierung zugänglich, so daß der Klebstoff 11 einfach appliziert werden kann. Beim anschließenden Einführen wird das Lichtwellenleiterende 10 von dem Klebstoff 11 benetzt. Nach vollständig in den Steckerstift 2 eingeführtem Lichtwellenleiterende 10 wird auch das hintere Gehäuseteil 30 aufgeschoben und verrastet mittels Rastfingern 40, 41 mit dem Gehäuseteil 20. Die Zugentlastungsmittel 32 werden zwischen dem Fortsatz 30a und einer nicht gezeigten Knickschutztülle fixiert. Nach der Montage kann der Steckverbinder 1 bedarfsweise insgesamt in ein äußeres Gehäuse 42 (Figur 2) eingeschoben und in diesem verrastet werden. Das Gehäuse 42 kann in an sich bekannter Weise zur Bildung eines sogenannten "push-pull-Steckers" dienen.

## Patentansprüche

1. Steckverbinder für ein Lichtwellenleiterkabel (9)
mit einem Steckerstift (2), der ein Ende eines Lichtwellenleiters (8) umgibt,
mit einer zur Steckachse (12) konzentrischen Schraubenfeder (15), die auf das rückwärtige Ende (2b;4b) des Steckerstifts (2) oder eines Steckerstiftlagers (4) aufgeschoben ist,
mit einem in Steckrichtung (A) vorderen Gehäuseteil (20) mit einer axialen Durchgangsöffnung (21), in der der Steckerstift (2) entgegen der Kraft der Schraubenfeder (15) axial verschiebbar ist, und
mit einem hinteren Gehäuseteil (30), das mit dem vorderen Gehäuseteil (20) verbindbar ist,
**dadurch gekennzeichnet, daß**
das vordere Gehäuseteil (20) öffnungsinnenseitig angeordnete Halteelemente (32,34) aufweist, die die Schraubenfeder (15) bei unverbundenem vorderen Gehäuseteil (20) halten und damit diese und den Steckerstift (2) gegen ein rückwärtiges Herausrutschen aus dem vorderen Gehäuseteil (20) sichern.

2. Steckverbinder nach Anspruch 1,
**dadurch gekennzeichnet, daß**
die Halteelemente (32,34) mindestens zwei sich rückwärtig parallel zur Steckachse (12) erstreckende federnde Rastarme (32a,34a) sind, die mit Rastelementen (32b,34b) an der Schraubenfeder (15) angreifen.

3. Steckverbinder nach Anspruch 2,
**dadurch gekennzeichnet, daß**
die Rastelemente (32b,34b) innenseitige, den Windungen der Schraubenfeder (15) zugewandte und auf deren Kontur abgestimmte Profilierungen (32c,34c) aufweisen.

## Claims

1. Connector for an optical fibre cable (9), having a plug pin (2) which surrounds one end of an optical fibre (8), having a helical spring (15) which is concentric with the plug-in axis (12) and is pushed onto the rear end (2b; 4b) of the plug pin (2) or of a plug pin bearing (4), having a housing part (20) which is at the front in the plug-in direction (A) and has an axial through opening (21) in which the plug pin (2) can be displaced axially against the force of the helical spring (15), and having a rear housing part (30), which can be connected to the front housing part (20), characterized in that the front housing part (20) has holding elements (32, 34) which are arranged on the inside of the opening and hold the helical spring (15) when the front housing part (20) is not connected, and thereby secure said spring and the plug pin (2) against slipping out backward from the front housing part (20).

2. Connector according to Claim 1, characterized in that the holding elements (32, 34) are at least two resilient latching arms (32a, 34a) which extend backward parallel to the plug-in axis (12) and act by means of latching elements (32b, 34b) on the helical spring (15).

3. Connector according to Claim 2, characterized in that the latching elements (32b, 34b) have internal profiles (32c, 34c) which face the turns of the helical spring (15) and are matched to the contour of the latter.

## Revendications

1. Connecteur à fiche pour un câble (9) de fibre optique
comprenant un contact (2) mâle qui entoure une extrémité d'une fibre (8) optique,
comprenant un ressort (15) hélicoïdal concentrique à l'axe (12) de la pièce mâle, qui est enfilé sur l'extrémité (2b ; 4b) arrière de la pièce mâle (2) ou d'un palier (4) de la pièce mâle,
comprenant une partie (20) de boîtier en avant dans la direction (A) d'enfichage ayant une ouverture (21) axiale de passage, dans laquelle la pièce (2) mâle peut être enfilée axialement à l'encontre de la force du ressort (15) hélicoïdal, et
comprenant une partie (30) arrière de boîtier qui peut être reliée à la partie (20) avant de boîtier,
caractérisé en ce que la partie (20) avant de boîtier comporte des éléments (32, 34) de maintien disposés du côté intérieur de l'ouverture qui maintiennent le ressort (15) hélicoïdal lorsque la partie (20) avant du boîtier n'est pas reliée et empêchent ainsi celle-ci et la pièce (2) mâle de glisser vers l'arrière hors de la partie (20) avant du boîtier.

2. Connecteur à fiche suivant la revendication 1,
caractérisé en ce que les éléments (32, 34) de maintien sont au moins deux bras (32a, 34a) d'encliquetage élastiques s'étendant vers l'arrière parallèlement à l'axe (12) de la pièce mâle et attaquant par des éléments (32b, 34b) d'encliquetage le ressort (15) hélicoïdal.

3. Connecteur à fiche suivant la revendication 2,
caractérisé en ce que les éléments (32b, 34b) d'encliquetage comportent des profilages (32c, 34c) du côté intérieur qui sont tournés vers les spires du ressort (15) hélicoïdal et qui sont adaptés à leurs contours.
